(19) Europäisches Patentamt
European Patent Office
Office européen des brevets

(11) Publication number: **0 422 229 A1**

(12) # EUROPEAN PATENT APPLICATION published in accordance with Art. 158(3) EPC

(21) Application number: **90902386.3**

(51) Int. Cl.[5]: **C09J 167/02**, B32B 27/36

(22) Date of filing: **25.01.90**

(86) International application number:
**PCT/JP90/00082**

(87) International publication number:
**WO 90/08812 (09.08.90 90/19)**

(30) Priority: **25.01.89 JP 15769/89**

(43) Date of publication of application:
**17.04.91 Bulletin 91/16**

(84) Designated Contracting States:
**DE FR GB IT**

(71) Applicant: **NIPPON PETROCHEMICALS CO, LTD**
**1-3-1, Uchisaiwaicho, Chiyoda-ku**
**Tokyo 100(JP)**

(72) Inventor: **BANRYU, Mamoru**
**5-23-13, Shibayama Funabashi-shi**
**Chiba-ken 274(JP)**
Inventor: **OKADA, Junichi**
**7-11-6, Hachimandai Kisarazu-shi**
**Chiba-ken 292(JP)**

(74) Representative: **Strehl, Schübel-Hopf, Groening**
**Maximilianstrasse 54 Postfach 22 14 55**
**W-8000 München 22(DE)**

(54) **ADHESIVE RESIN COMPOSITION, PREPARATION THEREOF, AND LAMINATE COMPRISING SAME.**

(57) This invention relates to an adhesive resin composition exhibiting an excellent adhesion to various difficultly bondable substrates and comprising at least (1)60 to 95 % by weight of a thermoplastic copolyester resin and (2)40 to 5% by weight of a multiphase structure thermoplastic resin composed of 5 to 95% by weight of an epoxidized ethylene copolymer and 95 to 5% by weight of a vinyl (co)polymer prepared from at least one vinyl monomer, wherein either (co)polymer forms a dispersed phase comprising particles of a diameter of 0.001 to 10 µm. The invention also relates to a method for preparing said composition and a laminate having at least two layers comprising said composition and at least one substrate selected from the group consisting of thermoplastic resin, thermosetting resin, rubber, metal, glass, wood, paper, nonwoven fabric and woven fabric.

EP 0 422 229 A1

# AN ADHESIVE COMPOSITE RESIN AND A PREPARATION METHOD THEREOF AND A LAMINATED MATERIAL USING THE SAME

## Field of the Invention

The present invention relates to an adhesive composite resin and a method of preparing the same, and also to a laminated material using said adhesive composite resin.

More specifically, the present invention relates to an adhesive composite resin having an improved adhesion to a thermoplastic resin such as hard or soft polyvinyl chloride type resin, aromatic polyester type resin and polycarbonate type resin, etc., as well as to a metal such as aluminum, iron and lead, etc.; to a method of preparing said adhesive composite resin and to a laminated material using the same.

## Prior Art

Conventionally as adhesive resins to the thermoplastic resins such as polyolefin type resin represented by polyethylene, polyamide type resin, etc., and also to aluminum and stainless steel, etc., there have been known such compounds as: copolymers of ethylene with polar group monomer or derivatives thereof; and modified polyolefin type resins which are prepared by modifying the above mentioned polyolefin type resin with unsaturated carboxylic acids or derivatives thereof such as acrylic acid, maleic anhydride, for example, ethylene (meth) acrylic acid copolymer or ionomers thereof, ethylene/glycidyl (meth) acrylate copolymer; and the latter of which have been commercially available as "N polymer" (trade name, made by Nippon Petrochemicals Company), or "Admer" (trade name, made by Mitsui Petrochemicals Company) and have been serving as adhesive resins for various kinds of lamination.

Although such conventional adhesive resins show excellent adhesion to certain kinds of material such as polyolefin type resins, polyamide type resins and metals, etc., they do not show satisfactory adhesive property to the specific material such as hard•soft polyvinyl chloride resins, aromatic polyester type resins, polycarbonate type resins and metals like lead, etc., yet.

Meanwhile thermoplastic copolymeric polyester resins have prominent properties in flexibility, weather resistance and adhesion to various substrates so that they have been widely used as coatings and adhesives. As compared with the above mentioned adhesive resins like ethylene copolymers or modified polyolefins, etc., they show far improved adhesion especially to hard•soft polyvinyl chloride type resins, aromatic polyester type resins, polycarbonate type resins, etc., however they have been confronting with such drawbacks as brittleness, and poor workability in addition to an extreme blocking, which has been resulting in difficulties of forming into a film.

Said drawback of the blocking has been causing difficulties in a secondary working due to adhesion to a cooling roll or blocking of the coiled raw film when said thermoplastic copolymeric polyester resin is formed into a film through a forming method like an inflation process or T-die process, etc., so as to utilize as an adhesive film or to laminate on the substrate surfaces made of metal, for example.

## Disclosure of the Invention:

The present invention is achieved so as to eliminate the above described defects and its primary object is to provide an adhesive composite resin which has not only an excellent adhesive strength to the so-called less-adhereable substrates, such as hard or soft polyvinyl chloride type resins, polyester type resin, and polycarbonate type resins, etc., which have hardly been adhered by the conventional adhesive resins like ethylene copolymer or modified polyolefin, etc., but also has improved properties in blocking resistance and warm-water resistance together with an improved secondary processability.

Another object of the present invention is to provide a method of preparing the above explained adhesive composite resin.

Still another object of the present invention is to provide a laminated material having a construction of at least two layers utilizing the above explained adhesive composite resin.

The first invention is an adhesive composite resin comprising:

I) a thermoplastic copolymeric polyester resin in amounts of from 60 to 95% by weight; and

II) a thermoplastic resin having a multiphasic structure in amounts of from 40 to 5% by weight, which consists of an epoxy group-containing ethylene copolymer in amounts of from 5 to 95% by weight and a

vinyl type (co) polymer obtained from at least one kind of vinyl monomer in amounts of from 95 to 5% by weight, and in which either of said (co) polymers fórms a dispersed phase of a particle diameter of 0.001 to 10 µm;

and an adhesive composite resin comprising:

I) a thermoplastic copolymeric polyester resin in amounts of from 60 to 95% by weight;

II) a thermoplastic resin having a multiphasic structure in amounts of from 40 to 5% by weight, which consists of an epoxy group-containing ethylene copolymer in amounts of from 5 to 95% by weight and a vinyl type (co) polymer obtained from at least one kind of vinyl monomer in amounts of from 95 to 5% by weight, and in which either of said (co) polymers forms a dispersed phase of a particle diameter of 0.001 to 10 µm; and

III) a copolymer of ethylene with an unsaturated carboxylic acid or a derivative thereof and/or an olefin type (co) polymer modified by an unsaturated carboxylic acid or a derivative thereof, in amounts of from 5 to 100 parts by weight relative to 100 parts by weight of said I) + said II).

The second invention is a method of preparing said adhesive resin in such a manner that: at least one kind of vinyl monomer, at least one kind of radical (co) polymeric organic peroxide and a radical polymerization initiator are added to an aqueous suspension of an epoxy group-containing ethylene copolymer, and the resultant mixture is heated under a condition where the degradation of said radical polymerization initiator does not substantially progress, for purposes of impregnating said vinyl monomer, said radical (co) polymeric organic peroxide and said radical polymerization initiator into said epoxy group-containing ethylene copolymer; when the impregnation ratio reaches 50% by weight or more as compared with the impregnation initiation the temperature of said aqueous suspension is raised to initiate the copolymerization of said aqueous suspension is raised to initiate the copolymerization of said vinyl monomer with said radical (co) polymeric organic peroxide within said epoxy group-containing ethylene copolymer to obtain a graft prepolymer; thus obtained graft prepolymer (A) in an amount of from 1 to 100% by weight, an epoxy group-containing ethylene copolymer (B) in an amount of from 0 to 99% by weight and a vinyl type (co) polymer (C) prepared by poly merizing at least one kind of vinyl monomer in an amount of from 0 to 99% by weight, are melt-mixed with said thermoplastic copolymeric polyester resin I) or said (A), (B) and (C) are previously melt-mixed within a temperature range of from 100 to 300°C then the resultant mixture is further melt-mixed with said thermoplastic copolymeric polyester resin I) to prepare the present objective adhesive composite resin.

The third invention is a laminated material having a construction of at least two layers which comprises a substrate of at least one selected from the group consisting of thermoplastic resin, setting resin, rubber, metal, glass, wood, paper, nonwoven fabric and woven fabric, and an adhesive composite resin as explained in the above first invention.

The thermoplastic copolymeric polyester resin I) in accordance with the present invention, can be prepared by copolycondensating a carboxylic acid component with a glycol component, both being appropriately selected.

The above mentioned carboxylic acid may include: terephthalic acid, isophthalic acid, o-phthalic acid, 2, 6-naphthalene dicarboxylic acid, 1, 5-naphthalene dicarboxylic acid, bis (p-carboxyphenyl) methane, anthracene dicarboxylic acid, 4, 4'-diphenyl ether dicarboxylic acid, 1, 2-bis ( phenoxy) ethane 4, 4'-dicarboxylic acid and the ester-forming derivatives of these compounds, etc.

Among the above exemplified, as a carboxylic acid component such constitution is preferable as terephthalic acid or terephthalic acid and isophthalic acid in amounts of from 40 to 100 mole percentage and dicarboxylic acid other than terephthalic acid and isophthalic acid, in amount of from 60 to 0 mole percentage.

As glycol components there are: aliphatic diols having carbon atoms of from 2 to 10, such as ethylene glycol, propylene glycol, 1, 4-butanediol, neopentyl glycol, 1, 5-pentanediol, 1, 6-hexanediol, decamethylene diglycol, cyclohexanediol, etc.; and long-chain glycols having a molecular weight of from 400 to 6,000, such as polyethylene glycol, poly- 1, 3-propylene glycol, polytetramethylene glycol, etc; and mixtures of these compounds.

Among the above, ethylene glycol, 1, 4-butanediol, neopentyl glycol give satisfactory results in particular.

The polymerization method of the above described thermoplastic copolymeric polyester resin may be in such a man ner that: for example, terephthalic acid, isophthalic acid and other dicarboxylic acid or an ester-forming derivative of these compounds are added by glycols and catalysts and the resultant mixture is subjected to an esterification reaction directly or to an ester exchange reaction to carry out the polymerization.

Also modified ether type polyester resins may be applicable in the present invention, which are

prepared by adding glycols to polyethylene terephthalate resin and then subjected to a depolymerization and a repolycondensation reaction through ester exchange reactions by glycidylcols.

One example of the epoxy group-containing ethylene copolymer used in the thermoplastic resin having a multiphasic structure in the present invention, is a copolymer of a binary copolymer of ethylene with unsaturated glycidyl group-containing monomer through a high-pressure radical polymerization, or a copolymer of a ternary or polynary copolymer of ethylene with unsaturated glycidyl group-containing monomer and other unsaturated monomer, which preferably comprises from 60 to 99.5% by weight of ethylene, from 0.5 to 40% by weight of glycidyl group-containing monomer and from 0 to 39.5% by weight of unsaturated monomer.

The above mentioned unsaturated glycidyl group-containing monomer may include: glycidyl acrylate, glycidyl methacrylate, itaconic acid monoglycidyl ester, butenetricarboxylic acid monoglycidyl ester, butenetricarboxylic acid diglycidyl ester, butenetricarboxylic acid triglycidylester, and glycidyl esters of α-chloroallyl, maleic acid, crotonic acid, and fumaric acid, etc.; glycidyl ethers such as vinylglycidyl ether, allylglycidyl ether, glycidyloxyethylvinyl ether, styrene-p-glycidyl ether, etc.; and p-glycidylstyrene, etc. Among the above exemplified compounds, glycidyl methacrylate and allylglycidyl ether give satisfactory results in particular. The above mentioned other unsaturated monomers in the present invention may be at least one monomer selected from olefins, vinylesters, α, β-ethylenic unsaturated carboxylic acids or derivatives thereof and more specifically such may be exemplified as: olefins such as propylene, butene-1, hexene-1, decene-1, octene-1, styrene, etc.; vinylesters such as vinyl acetate, vinylpropionate, vinylbenzoate, etc; acrylic acid, methacrylic acid, methyl-, ethyl-, propyl-, butyl-, 2-ethylhexyl-, cyclohexyl-, dodecyl- and octadecyl- esters of acrylic or methacrylic acid, maleic acid, maleic anhydride, itaconic acid, fumaric acid, maleic acid monoesters and diesters; vinyl ethers such as vinyl chloride, vinylmethyl ether, and vinylethyl ether, etc.; and amide type acrylate compounds; among which (meth) acrylic acid esters are the most recommended.

As the above explained epoxy group-containing ethylene copolymer such may be exemplified as: ethylene/glycidyl methacrylate copolymer, ethylene/vinyl-acetate/glycidyl methacrylate copolymer, ethylene/ethyl-acrylate/glycidyl methacrylate copolymer, ethylene/carbon-monoxide/glycidyl methacrylate copolymer, ethylene/glycidyl acrylate copolymer, ethylene/ vinyl acetate/glycidyl acrylate copolymer, etc., among which ethylene/glycidyl methacrylate copolymer, ethylene/ethyl acrylate/glycidyl methacrylate copolymer and ethylene/vinyl acetate/glycidyl methacrylate copolymer give satisfactory results particularly.

The above exemplified epoxy group-containing ethylene copolymers may be used in combination optionally.

Said epoxy group-containing ethylene copolymer is prepared through the high-pressure radical polymerization in the following way. A monomeric mixture comprising the afore-explained ethylene in amounts of from 60 to 99.5% by weight, at least one kind of the unsaturated glycidyl group-containing monomers in amounts of from 0.5 to 40% by weight and at least one of another unsaturated monomers is an amount of from 0 to 39.5% by weight, is subjected to a polymerization in the presence of a radical polymerization initiator in an amount of from 0.0001 to 1% by weight based on the sum total weight of the monomers under a polymerization pressure of from 500 to 4,000 kg/cm$^2$, preferably from 1,000 to 3,500 kg/cm$^2$ at a reaction temperature of from 50 to 400 ° C, preferably from 100 to 350 ° C with the help of a chain transfer agent together with an assistant agent optionally, by allowing said monomers simultaneously or step-wisely contacting with each other in an autoclave or tubular reactor.

The above mentioned radical polymerization initiator may be such common initiators as peroxide, hydroperoxide, azo compounds, amine oxide compounds, and oxygen, etc.

As a chain transfer agent such compounds may be exemplified as: hydrogen, propylene, butene-1; saturated aliphatic hydrocarbons and halogenated hydrocarbons of carbon numbers of from 1 to 20 or more, such as methane, ethane, propane, butene, isobutane, n-hexene, n-heptane, cycloparaffins, chloroform and carbon tetrachloride; satu rated aliphatic alcohols of carbon numbers of from 1 to 20 or more, such as methanol, ethanol, propanol, and isopropanol; saturated aliphatic carbonyl compounds of carbon number of from 1 to 20 or more, such as carbon monoxide, acetone and methylethyl ketone; and aromatic compounds such as toluene, diethylbenzene and xylene, etc.

Another example of the epoxy group-containing ethylene copolymer in accordance with the present invention, is a modified compound prepared by an addition reaction of the afore-explained unsaturated glycidyl group-containing monomer to the conventional ethylene homopolymer or copolymer.

The above explained ethylene type polymer may include: homopolymers of low-, medium- and high-density polyethylene; copolymers of ethylene as a major component with other α-olefin, such as ethylene/propylene copolymer, ethylene/ butene-1 copolymer, ethylene/hexane-1 copolymer, ethylene/ 4-methyl-pentene-1 copolymer, ethylene/octene-1 copolymer, etc.; ethylene/vinyl acetate copolymer;

ethylene/acrylic acid copolymer; ethylene/methacrylic acid copolymer; copolymers of ethylene with methyl-, ethyl-, propyl, isopropyl-, butyl-, and the like acrylates or methacrylates; ethylene/ maleic acid copolymer; ethylene/propylene random copolymer; ethylene-propylene/diene copolymer; liquidous polybutadiene; ethylene/vinyl acetate/vinyl chloride copolymer; and mixtures of these compounds.

Vinyl type (co) polymer used in the present inventive thermoplastic resin having a multiphasic structure, can be prepared by polymerizing one or more vinyl monomers selected from: aromatic vinyl monomers, such as styrene, nuclear-substituted styrene, for example, methyl styrene, dimethyl styrene, ethyl styrene, isopropyl styrene, chlorostyrene, etc., and α-substituted styrene, for example, α-methyl styrene, α-ethylstyrene, etc.; alkyl esters of acrylic acid or methacrylic acid having carbon number of from 1 to 7, for example, (meth) acrylic acid ester monomers such as methyl-, ethyl, propyl-, isopropyl-, butyl- esters of (meth) acrylic acid; (meth) acrylonitrile monomers; vinyl ester monomers such as vinyl acetate, vinyl propionate, etc ; (meth acrylic amide monomers; monoesters or diesters of maleic anhydride and maleic acid. Among the above exemplified, the vinyl type (co) polymer containing aromatic vinyl monomer in amounts of 50% by weight or more is the most preferable particularly because of its prominent effect in preventing the blocking of the adhesive composite resin.

The thermoplastic resin having a multiphasic structure in the present invention means the thermoplastic resin wherein in a matrix of either an epoxy group-containing ethylene copolymer or a vinyl type (co) polymer, a different component from that of the matrix, i.e. a vinyl (co) polymer or an epoxy group-containing ethylene copolymer, is uniformly dispersed in a spherical particle form.

The particle diameter of the dispersing polymer is from 0.001 to 10 μm, preferably from 0.01 to 5 μm. The particle diameter of the dispersing resin of less than 0.001 μm or exceeding 10 μm may result in not only a lowering in adhesion, and in warm-water resistance but also a poor appearance of the productant resin due to an insufficient dispersion of the particle when blended in the thermoplastic copolymeric polyester resin, which is not favorable.

The average degree of polymerization of the vinyl (co) polymer in the present inventive thermoplastic resin having a multiphasic structure, is from 5 to 10,000, preferably from 10 to 5,000.

An average degree of polymerization less than 5 will result in a lowering of the thermal resistance, while exceeding 10,000 will result in a high melt viscosity, which may cause deteriorations in moldability and dispersibility, thus values out of this range are not favorable.

The present inventive thermoplastic resin having a multiphasic structure contains epoxy group-containing ethylene copolymer in amounts of from 5 to 95% by weight, preferably from 20 to 90% by weight, which leads to an amount of vinyl type (co) polymer to be from 95 to 5, preferably from 80 to 10% by weight. When the content of the epoxy group-containing ethylene copolymer is less than 5% by weight, the dispersion in the thermoplastic co-polymeric polyester resin becomes insufficient, while exceeding 95% by weight will cause the blocking, which are undesirable.

The grafting method in preparing the present inventive thermoplastic resin having a multiphasic structure may be the common chain transfer process, or ionization radiation process, and the like, but the following method is recommended because it can be conducted at a high graft efficiency and free from the secondary aggregation due to the heat so that it can attain the desired properties more effectively.

Hereinbelow one example of the preparation method of the adhesive resin in accordance with the present invention will be described in detail.

First, the thermoplastic resin having a multiphasic structure is prepared previously. Water is suspended in an epoxy group-containing ethylene copolymer in amounts of 100% by weight. Separately, at least one vinyl monomer in amounts of from 5 to 400 parts by weight is dissolved by a mixture consisting of tone ore more radical (co) polymeric organic peroxides represented by a general formula (a) or (B), which will be described later, in an amount of from 0.1 to 10 parts by weight relative to 100 parts by weight of said vinyl monomer, together with a radical polymerization initiator of which degradation temperature ranges from 40 to 90°C so as to obtain a half-life of 10-hour, in an amount of from 0.01 to 5 parts by weight relative to 100 parts by weight of a sum total of said vinyl monomer and said radical (co) polymeric organic peroxide. Thus prepared mixture of vinyl monomer is added to the previously prepared aqueous suspension of the epoxy group-containing ethylene copolymer. The resultant mixture is heated under a condition where the degradation of said radical polymerization initiator does not substantially occur, so as to impregnate said vinyl monomer, said radical (co) polymeric organic peroxide and said radical polymerization initiator into said epoxy group-containing ethylene copolymer. When the impregnation ratio reaches 50% by weight or more as compared with the impregnation initiation, the temperature of this aqueous suspension is raised in order to conduct the copolymerization of said vinyl monomer with said radical (co) polymeric organic peroxide within said epoxy group-containging ethylene copolymer to obtain a graft polymerization precursor (A), which is also a thermoplastic resin having a multiphasic structure.

Thus obtained graft polymerization precursor (A) may be melt-mixed directly with the thermoplastic copolymeric polyester resin (I) but the most desirable thermoplastic resin having a multiphasic structure (II) is obtained by kneading said graft polymerization precursor.

Namely, the present inventive thermoplastic resin having a multiphasic structure can also be prepared by kneading said graft polymerization precursor (A) at a temperature ranging from 100 to 300 °C while melting. Otherwise, said graft polymerization precursor may be blended with an epoxy group-containing ethylene copolymer (B) or a vinyl type (co)-polymer (C) and the resultant mixture may be kneaded while melting to obtain the desired thermoplastic resin having a multiphasic structure. Thus prepared thermoplastic resin having a multiphasic structure. Thus prepared thermoplastic resin having a multiphasic structure (II) is melt-mixed with the previously prepared thermoplastic copolymeric polyester resin to obtain the present inventive adhesive composite resin (hereinafter referred to as the adhesive composite resin "AD-1").

The melt-mixing method may be the conventionally employed kneading machines, such as a Banbury mixer, a pressure kneader, a kneading extruder, a biaxial extruder and a rolls, etc.

The compounding ratio between said thermoplastic copolymeric polyester resin (I) and said thermoplastic resin having a multiphasic structure (II) is 60 - 95% by weight of the former relative to 40-5% by weight of the latter.

When the compounding ratio of said thermoplastic resin having a multiphasic structure (II) exceeds 40% by weight, adhesion to be substrates made of hard•soft polyvinyl chloride type resin, etc. deteriorates, which is disadvantageous. While an amount less than 5% by weight can hardly contribute to an improvement in blocking. Meanwhile said radical (co) polymeric organic peroxides are compounds represented by the following general formula (a) or (b):

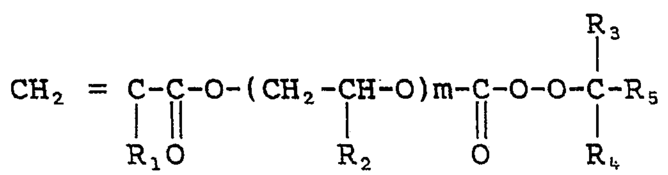
··· (a)

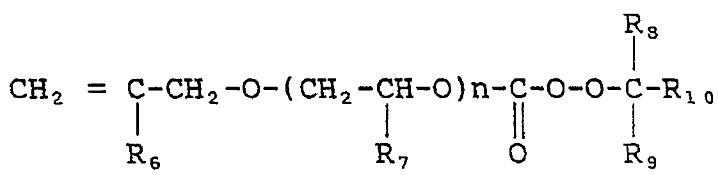
··· (b)

wherein $R_1$ stands for a hydrogen atom or an alkyl group having carbon atoms of from 1 to 2;

$R_2$ and $R_7$ respectively stand for a hydrogen atom or a methyl group;

$R_6$ stands for a hydrogen atom or an alkyl group having carbon atoms of from 1 to 4;

$R_3$, $R_4$ and $R_8$, $R_9$ respectively stand for an alkyl group having carbon atoms of from 1 to 4;

$R_5$ and $R_{10}$ respectively stand for an alkyl, phenyl or alkylated phenyl group having carbon atoms of from 1 to 12 or a cycloalkyl group having carbon atoms of from 3 to 12;

m stands for a figure of 1 or 2; and

n stands for a figure of 0, 1 or 2.

More specifically, as radical (co) polymeric organic peroxides represented by the general formula (a), such may be exemplified as: t-butyl peroxyacryloyloxy ethyl carbonate, t-amyl peroxyacryloyloxy ethyl carbonate, t-hexyl peroxyacryloyloxy ethyl carbonate, 1, 1, 3, 3-tetramethyl butyl peroxyacryloyloxy ethyl carbonate, cumyl peroxyacryloyloxy ethyl carbonate, p-isopropylcumyl peroxyacryloyloxy ethyl carbonate; t-butyl peroxymethacryloyloxy ethyl carbonate, t-amyl peroxymethacryloyloxy ethyl carbonate, 1, 1, 3, 3-tetramethylbutyl peroxymethacryloyloxy ethyl carbonate, cumyl peroxymethacryloyloxy ethyl carbonate, p-isopropylcumyl peroxymethacryloyloxy ethyl carbonate; t-butyl peroxyacryloyloxy ethoxy carbonate, t-amyl peroxyacryloyloxy ethoxy ethyl carbonate, t-hexyl peroxyacryloyloxy ethoxyethyl carbonate, 1, 1, 3, 3-tetramethylbutyl peroxyacrloyloxy ethoxyethyl carbonate, cumyl peroxyacryloyloxy ethoxyethyl carbonate, p-isopropylcumyl peroxyacryloyloxy ethoxyethyl carbonate; t-butyl peroxymethacryl oyloxy ethoxyethyl carbonate, t-amyl peroxymethacryloyloxy ethoxyethyl carbonate, t-hexyl peroxymethacryloyloxy ethoxyethyl carbonate, 1, 1, 3, 3-tetramethylbutyl peroxymethacryloyloxy ethoxyethyl carbonate, cumyl peroxymethacryloyloxy ethoxyethyl carbonate; p-isopropyl cumyl peroxymetha cryloyloxy ethoxyethyl carbonate; t-butyl peroxyacryloyloxy isopropyl carbonate, t-amyl peroxyacryloyloxy isopropyl carbonate, t-hexyl peroxyacryloyloxy isopropyl carbonate, 1, 1, 3, 3-tetramethylbutyl peroxyacryloyloxy isopropyl carbonate, cumyl peroxyacryloyloxy isopropyl carbonate, cumyl peroxyacryloyloxy isopropyl carbonate, p-isopropylcumyl peroxyacryloyloxy isopropyl carbonate; t-butyl peroxymethacryloyloxy isopropyl carbonate, t-amyl peroxymethacryloyloxy isopropyl carbonate, t-hexyl peroxymethacryloyloxy isopropyl carbonate, 1, 1, 3, 3-tetramethylbutyl peroxymethacryloyloxy isopropyl carbonate, cumyl peroxymethacryloyloxy isopropyl carbonate, p-isopropylcumyl peroxymethacryloyloxy isopropyl carbonate, etc.

Further, compounds represented by the general formula (b) may include: t-butyl peroxyallyl carbonate, t-amyl peroxyallyl carbonate, t-hexyl peroxyallyl carbonate, 1, 1, 3, 3-tetramethylbutyl peroxyallyl carbonate, p-methane peroxyallyl carbonate, cumyl peroxyallyl carbonate; t-butyl peroxymethallyl carbonate, t-amyl peroxymethallyl carbonate, t-hexyl peroxymethallyl carbonate, 1, 1, 3, 3-tetramethylbutyl peroxymethallyl carbonate, p-menthane peroxymethallyl carbonate, cumyl peroxymethallyl carbonate; t-butyl peroxyallylloxy ethyl carbonate, t-amyl peroxyalloyloxy ethyl carbonate; t-butyl peroxymethallyloxy ethyl carbonate, t-amyl peroxymethallyloxy ethyl carbonate, t-hexyl peroxymethallyloxy ethyl carbonate; t-butyl peroxyallyloxy isopropyl carbonate, t-amyl peroxyalloyloxy isopropyl carbonate, t-hexyl peroxyallyloxy isopropyl carbonate; t-butyl peroxymethallyloxy isopropyl carbonate, t-hexyl methallyloxy isopropyl carbonate, etc.

Among the above exemplified, t-butyl peroxyacryloyloxy ethyl carbonate, t-butyl peroxymethacryloyloxy ethyl carbonate, t-butyl peroxyallyl carbonate, t-butyl peroxymethallyl carbonate give satisfactory results in particular.

In the present invention when the copolymer of ethylene with the unsaturated carboxylic acid or a derivative thereof and/or olefin type (co) polymer modified by the unsaturated carboxylic acid or a derivative thereof (III) is incorporated in amounts of from 5 to 100 parts by weight relative to 100 parts by weight of the aforementioned adhesive composite resin, properties of the productant resin, for example, adhesive strength to the aforementioned substrates, can further be improved (hereinafter referred to as adhesive composite resin "AD - 2").

The above mentioned (III) copolymer of ethylene with the unsaturated carboxylic acid or a derivative thereof and/or olefin type (co) polymer modified by the unsaturated carboxylic acid or a derivative thereof, may be such compounds as: ethylene-acrylic acid copolymer; ethylene-methacrylic acid copolymer; copolymers of ethylene with methylethyl-, propyl-, butyl-, 2-ethylhexyl-, cyclohexyl-dodecyl-, octadecyl-, and the like esters of methacrylic acid or acrylic acid; homopolymers of polyethylene, polypropylene, polybutene-1, etc., each having a low, medium- or high- density respectively; copolymers of ethylene as a major component with other $\alpha$-olefins, such as ethylene/propylene copolymer, ethylene/butene-1 copolymer, ethylene/ hexane-1 copolymer, ethylene/4 methylpentene-1 copolymer, ethylene/octene-1 copolymer, etc.; ethylene/vinyl acetate copolymer; ethylene/acrylic acid copolymer; ethylene/methacrylic acid copolymer; copolymers of ethylene with methyl-, ethyl-, propyl-, isopropyl-, butyl-, and the like esters of acrylic acid or methacrylic acid; ethylene/maleic acid copolymer; ethylene/propylene random copolymer; ethylene/ propylene/diene copolymer; ethylene/vinyl acetate/vinyl chloride copolymer; modified polyolefin (co) polymers prepared through an addition reaction of unsaturated carboxylic acids or derivatives thereof, such as methacrylic acid, acrylic acid, maleic acid, maleic anhydride, itaconic acid, fumaric acid, maleic acid monoester, etc., to the polyolefin type (co) polymer as exemplified above or the mixture thereof, in the presence of the organic peroxide.

The third invention is a laminated material consisting of at least two layers of a substrate and the above explained adhesive composite resin AD-1 or AD-2.

The substrate in accordance with the present invention may be at least one selected from the group consisting of thermoplastic resin, setting resin, rubber, metal, glass, wood, paper, nonwoven fabric and woven fabric. Said thermoplastic resin, more specifically, is at least one selected from the group consisting of polyolefin type resin, polyamide type resin, aromatic polyester type resin, polycarbonate type resin, hard•soft vinyl chloride type resin, polyvinylidene chloride type resin, ethylene/vinyl acetate saponified copolymer, polystyrene type resin, ABS resin, acrylic type resin, fluororesin, polyurethane type resin, and the mixture of these compounds.

The setting resin may include unsaturated polyester resin, phenol resin, epoxy resin, urea resin, and melamine resin, etc.

As rubbers such synthetic or natural rubbers may be exemplified as: polyisobutylene, styrene/butadiene copolymeric rubber, butadiene/acrylonitrile copolymeric rubber, polybutadiene rubber, chloroprene rubber, ethylene/ propylene copolymeric rubber, ethylene/butene-1 copolymeric rubber, ethylene/propylene/diene rubber, urethane rubber, silicon rubber, ethylene-vinyl acetate copolymeric rubber, liquidous polybutadiene rubber, etc.

Regarding metals, aluminum, nickel, zinc, iron, copper and lead, etc. may be applicable.

With respect to other substrates, such as glass, wood, paper, woven fabric and nonwoven fabric, etc.,

the common material may be applicable without any restriction.

The above described substrates may be employed in various forms, such as film, sheet, board, foil, and punched plate, etc.

The more practical examples of said laminated material are: soft polyvinyl chloride resin (PVC) sheet/the present inventive adhesive composite resin AD-1 or AD-2 film/polyester resin (PET) film; PVC/AD-1 or AD-2 film /PET/lead sheet; PVC/AD-1 or AD-2 film/PVC; PVC/AD-1 or AD-2/PET; PVC/AD-1 or AD-2/aluminum sheet, etc.

The lamination methcd may be the conventional ones including multiphasic tubular blown film process, multiphasic T-die process, extrusion lamination method, powder coating method, fluid dipping method, powder melt-injection method, coating method, press-forming method, etc.

In the present invention other compounds such as different thermoplastic resins, natural rubbers, sunthetic rubbers, as well as additives like oxidation inhibitors, ultraviolet ray absorbers, pigments, dyestuffs, lubricants, etc., may be added within the scope not impairing the objects of the invention.

The best Modes to prosecute the Invention:

Below the present invention will be described in detail referring to experiments. (Preparation of the thermoplastic resin having a multiphasic structure II)

2,500 g of pure water was fed in a stainless steel autoclave having a capacity of 5 l and 2.5 g of polyvinyl alcohol, serving as a suspending agent, was added and dissolved therein. The resultant mixture was added by 700 g of ethylene/glycidyl methacrylate copolymer (content of glycidyl methacrylate: 15% by weight; trade name: "Rexpearl J-3700" made by Nippon Petrochemicals Company), serving as an epoxy group-containing ethylene copolymer, and then stirred to disperse. Separately, 1.5 g of benzoil peroxide (trade name: "Nyper B"; made by Nippon Oil & Fats Co., Ltd.), serving as a radical polymerization initiator, and 6 g t-butyl peroxymethacryloyloxy ethyl carbonate, serving as a radical (co) polymeric organic peroxide, were dissolved into 300 g of styrene, serving as a vinyl monomer. Thus prepared solution was fed in said autoclave and stirred well.

Thereafter thus prepared autoclave was heated to a temperature of from 60 to 65° C and stirred for 2 hours while maintaining the temperature in order to impregnate vinyl monomer containing both radical polymerization initiator and radical (co) polymeric organic peroxide, into epoxy group-containging ethylene copolymer. After confirming that a sum total of the impregnated vinyl monomer, radical (co) polymeric organic peroxide and radical polymerization initiator was 50% by weight or more as compared with the impregnation initiation, the temperature was raised to 80 - 85° C and maintained for 7 hours to terminate the polymerization. The resultant was washed with water and dried to obtain a graft polymerization precursor. Styrene polymer with thus obtained graft polymerization precursor was extracted by ethyl acetate, of which extract was measured in its average degree of polymerization to obtain a value of 900.

Thus prepared graft polymerization precursor was extruded at 200° C by means of a laboplastomill monoaxial extruder (made by Toyo Precision Machine Manufacturing Co., Ltd.) so as to conduct the graft polymerizaiton to produce the thermoplastic resin having a multiphasic structure (II)>

Thus produced thermoplastic resin having a multiphasic structure was subjected to an inspection by means of a scanning electron microscope (trade name: JEOL JSM T300; made by Japan Electron Optics Laboratory Co., Ltd.) to find the thermoplastic resin having a multiphasic structure where the true spherical resins having a particle diameter of 0.3 to 0.4 μm were dispersing uniformly.

Experiment 1

30 parts by weight of the above prepared thermoplastic resin having a multiphasic structure (II) and 70 parts by weight of thermoplastic copolymeric polyester resin (trade name: KC-510; made by Kuraray Co., Ltd.) were melt-kneaded by means of a biaxial extruder to obtain a pelletized adhesive composite resin.

Thus obtained composite resin was formed into a film of 100 μm thick through the T-die molding and thus produced film was laminated onto various kinds of substrates under the following conditions to measure the adhesive strength, of which results are shown in Table 1.

Comparative Example 1

Using ethylene/glycidyl methacrylate copolymer (glycidyl methacrylate content: 15% by weight; trade name; "Rexpearl J-3700" made by Nippon Petrochemicals Company), which was employed in Experiment 1, the film was prepared and measured in its adhesive strength to various kinds of substrates in the same manner as in Experiment 1. The results are also shown in Table 1.

Comparative Example 2

Using thermoplastic copolymeric polyester, which was employed in Experiment 1, adhesive strength to various kinds of substrates was measured just in the same manner as in Experiment 1. The results are also shown in Table 1.

Comparative Example 3

Using the conventional polyolefin modified by unsaturated carboxylic acid (low-density linear polyethylene modified by maleic acid; trade name: Nisseki N polymer A 1600" made by Nippon Petrochemicals Company), adhesive strength to various kinds of substrates was measured just in the same manner as in Experiment 1. The results are also shown in Table 1.

(Measuring conditions)

Specimen was prepared by a press-forming with the following substrated under the conditions of: Temperature: 180° C; pressure: 5 kg/cm$^2$; time: 5 min.

Thus prepared specimen was subjected to a 180°-peeling test at a tensile rate of 100 mm/min (in accordance with ASTM D-903-49) to obtain adhesive strength. (Excluding that soft vinyl chloride, ABS resin and PET resin were peeled at 90° and that adhesive composite resin film was reinforced with an aluminum sheet of 0.2 mm thick.) (Substrates)

| | |
|---|---|
| Aluminum : | JIS-H4000 A-1050 made by Sumitomo Light Metal Industries, Ltd. |
| Copper : | JIS-H3100 C-1100P made by Dowa Metal Industries, Ltd. |
| Stainless steel : | JIS-G4305 SUS-304 made by Nippon Metal Industries, Ltd. |
| Steel sheet : | JIS-G3141 SPCC-SB made by Nisshin Steel Co., Ltd. |
| Lead : | JIS-H4301 PBP made by Yoshida Machinery Ltd. |
| Soft vinyl chloride: | Trade name "Toughnyl 32-1179" made by Takato Petrochemicals Co., Ltd. |
| Hard vinyl chloride: | Trade name "Hishiplate HP-302A" made by Mitsubishi Plastic Industries, Ltd. |
| Polycarbonate : | Trade name "Upyron 2000" made by Mitsubishi Gas Chemicals, Ltd. |
| ABS : | Trade name "JSR-82" made by Japan Synthetic Rubber, Ltd. |
| Polyethylene terephthalate : | Trade name "Unipet RT-5330N"made by Japan Unipet, Ltd. |

Table 1
(Adhesive strength Kg/10 mm width)

| Substrate | Present inventibe adhesive composite resin | Ethylene-glycidyl methacrylate copolymer | Lowe-density linear polyethylene modified by maleic acid | Thermoplastic copolymeric polyester |
|---|---|---|---|---|
| Aluminum | 6.1 | 6.3 | 8.9 | 6.6 |
| Copper | 3.9 | 4.2 | 3.6 | 6.0 |
| Stainless steel | 4.0 | 4.7 | 4.1 | - - - |
| Iron | 5.1 | 6.1 | .9 | 8.2 |
| Lead | 5.8 | 5.1 | 3.6 | 5.1 |
| Soft vinyl chloride | 7.6 | >0.1 | 4.3 | 6.6 |
| Hard vinyl chloride | 8.9 | >0.1 | >0.1 | 6.5 |
| Polycarbonate | 8.3 | >0.1 | 6.0 | 7.0 |
| ABS | 7.3 | >0.1 | >0.1 | 7.7 |
| Polyethylene terephthalate | 1.9 | >0.1 | Substrate damaged | 1.2 |

Experiment 2

Using the adhesive composite resin employed in Experiment 1, an tubular blown film of 50μ thick was prepared, of which blocking property was measured. The result is shown in Table 2.

For comparison, respective resins employed in the above Comparative Examples and the commercially available low-density polyethylene by high-pressure method were also measured in the same manner and the results are shown in Table 2.

[Test method of blocking]

The film was allowed to be left in a thermohygrostat (40° C, 60%, 24 hours) for more than one hour with a load of 10 $Kg/cm^2$ and then the measurement was conducted at a tensile rate of 200 mm/min.

Table 2

| Resin | Blocking property ($kg/25\ cm^2$) |
|---|---|
| Commercially available LDPE (F 312)[1)] | 0.3 |
| LDPE (F22N)[2)] | 1.2 |
| MAnPO (A1600)[3)] | Resin fractured |
| E-GMA (J3700)[4)] | 1.4 |
| Thermoplastic copolymeric polyester (KC-510)[5)] | 6.6 |
| Present inventive adhesive composite resin | 1.5 |

1) Polyethylene by high-pressure method: Density: 0.925; MFR: 2.0; added by 1500 PPM of anti-blocking agent;
[trade name: "Nisseki Rexlon F 312" made by Nippon Petrochemicals Company]
2) Polyethylene by high-pressure method: Density: 0.924; MFR: 1.0; free from anti-blocking agent;
[trade name: "Nisseki Rexlon F 22" made by Nippon Petrochemicals Company]
3) Low-density linear polyethylene modified by maleic acid density: 0.93; MFR: 6.0;
[trade name: "Nisseki N polymer A1600" made by Nippon Petrochemicals Company]
4) Ethylene-glycidyl methacrylate copolymer: GMA content: 15 wt. %;
[trade name: "Nisseki Rexpearl J 3700" made by Nippon Petrochemicals company]
5) Thermoplastic copolymeric polyester:
[trade name: "KC-510" made by Kuraray Co., Ltd.]

Experiment 3

Using the laminated specimen of soft vinyl chloride employed in Experiment 1, the aqueous variation with time was measured and the result is shown in Table 3.

Comparative Example 4

Using the composite resin prepared by melt-mixing 10 parts by weight of ethylene/glycidyl methacrylate copolymer (content of glycidyl methacrylate: 15% by weight; trade name: "Rexpearl J-3700" made by Nippon Petrochemicals company), which was employed in Experiment 1, with 20 parts by weight of polystyrene, the variation with time of warm-water resistance was measured and the result is also shown in Table 3.

Examples 1 - 3

By changing the compounding ratio between the thermoplastic resin having a multiphasic structure and the thermoplastic copolymeric polyester resin, adhesive strengths and blocking properties of various kinds

of compounds were measured. The results are shown in Table 4.

Table 3
(Adhesive strength to the soft vinyl chloride, variation with time)

| | Adhesive strength (Kg/10 mm width) | | | | | |
|---|---|---|---|---|---|---|
| | 0 day | 10 days | 20 days | 30 days | 60 days | 90 days |
| Present inventive adhesive resin | 7.6 | 7.1 | 6.4 | 5.8 | 4.9 | 4.5 |
| E-GMA/PST blended compound | 7.7 | 7.1 | 5.0 | 2.8 | 1.3 | 0.7 |

Table 4

| Example | Thermoplastic polyester I) Parts by weight | Multiphasic structural resin II) Parts by weight | Adhesive strength (kg/10 mm width) | Blocking ($Kg/25\ cm^2$) |
|---|---|---|---|---|
| 1 | 90 | 10 | 8.0 | 5.0 |
| 2 | 70 | 30 | 7.3 | 1.5 |
| 3 | 50 | 50 | 4.5 | 0.3 |

As is obvious from Experiment 1, the present inventive composite resin shows an improved adhesion to the various kinds of substrates.

Further as is apparent from Experiment 2, the conventional thermoplastic copolymeric polyester can be remarkably improved in its blocking property without lowering its adhesive strength.

Furthermore warm-water resistance is also improved prominently.

(Industrial applicability)

As described above the present inventive adhesive composite resin has a high adhesive strength to the various kinds of substrates, especially to the less adhereable substrates such as hard or soft polyvinyl chloride type resin, polyester type resin, polycarbonate type resin, etc., which have hardly been adhered by the conventional adhesive resins such as ethylene copolymers, modified polyolefins, and the like.

The warm-water resistance can also be improved so that the blocking of the formed film can be prohibited, which results in advantages in the secondary workings.

Consequently the present inventive adhesive resin is applicable to a laminated material such as lead/adhesive resin/polyester, and the like, to be used as a tape for cable purposes, etc.

## Claims

**1.** An adhesive composite resin comprising:

I) a thermoplastic copolymeric polyester resin in amounts of from 60 to 95% by weight; and

II) a thermoplastic resin having a multiphasic structure in amounts of from 40 to 5% by weight, which consists of an epoxy group-containing ethylene copolymer in amounts of from 5 to 95% by weight and a vinyl type (co) polymer obtained from at least one kind of vinyl monomer in amounts of from 95 to 5% by weight, and in which either of said (co) polymers forms a dispersed phase of a particle diameter of 0.001 to 10 μm.

**2.** An adhesive composite resin according to Claim 1, wherein said resin comprises:

I) a thermoplastic copolymeric polyester resin in amounts of from 60 to 95% by weight;

II) a thermoplastic resin having a multiphasic structure in amounts of from 40 to 5% by weight, which consists of an epoxy group-containing ethylene copolymer in amounts of from 5 to 95% by weight and a vinyl type (co) polymer prepared from at least one kind of vinyl monomer in amounts of from

95 to 5% by weight, and in which either of said (co) polymers forms a dispersed phase of a particle diameter of 0.001 to 10 μm; and

III) a copolymer of ethylene with an unsaturated carboxylic acid or a derivative thereof, and/or an olefin type (co) polymer modified by an unsaturated carboxylic acid or a derivative thereof, in amounts of from 5 to 100 parts by weight relative to 100 parts by weight of said I) + said II).

**3.** An adhesive composite resin according to Claim 1 or 2, wherein said thermoplastic resin having a multiphasic structure is a blended compound comprising:

(A) a graft-polymerization precursor in an amount of from 1 to 100% by weight prepared by copolymerizing, within an epoxy group-containing ethylene copolymer, at least one kind of vinyl monomer with at least one kind of the radical (co) polymeric organic peroxides represented by the following general formula (a) or (b):

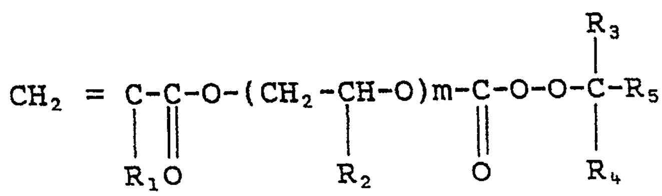 ... (a)

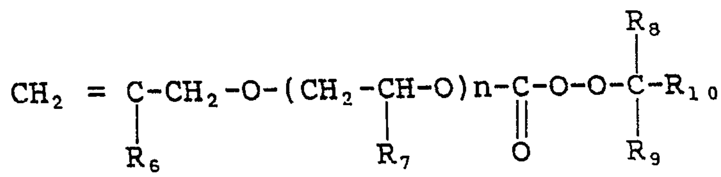 ... (b)

wherein $R_1$ stands for a hydrogen atom or an alkyl group having carbon atoms of 1 to 2;

$R_2$ and $R_7$ respectively stand for a hydrogen atom or a methyl group;

$R_6$ stands for a hydrogen atom or an alkyl group having carbon atoms of from 1 to 4;

$R_3$, $R_4$ and $R_8$, $R_9$ respectively stand for an alkyl group having carbon atoms of from 1 to 4;

$R_5$ and $R_{10}$ respectively stand for an alkyl, phenyl or alkylated phenyl group having carbon atoms of from 1 to 12, or a cycloalkyl group having carbon atoms of from 3 to 12;

m stands for a figure of 1 or 2; and

n stands for a figure of 0, 1 or 2;

(B) an epoxy group-containing ethylene copolymer in an amount of from 0 to 99% by weight; and

(C) a vinyl type (co) polymer prepared by (co) polymerizing at least one kind of vinyl monomer, in an amount of from 0 to 99% by weight; and/or a grafted compound obtained by melt-mixing said (A), said (B) and said (C).

**4.** An adhesive composite resin according to any of Claims 1 through 3, wherein said epoxy group-containing ethylene copolymer is a copolymer comprising ethylene in amounts of from 60 to 99.5% by weight, glycidyl (meth) acrylate in amounts of from 40 to 0.5% by weight and an unsaturated monomer other than the prescribed in an amount of from 0 to 39.5% by weight.

**5.** An adhesive composite resin according to any of Claims 1 through 4, wherein said vinyl monomer is an aromatic vinyl monomer.

**6.** A method of preparing an adhesive composite resin characterized by that: at least one kind of vinyl monomer, at least one kind of the radical (co) polymeric organic peroxides, and a radical polymerization initiator are added to an aqueous suspension of an epoxy group-containing ethylene copolymer, and the resultant mixture is heated under a condition where the degradation of said radical polymerization initiator does not substantially progress, so as to impregnate said vinyl monomer, said radical (co) polymeric organic peroxide and said radical polymerization initiator, into said epoxy group-containing ethylene copolymer; when the impregnation ratio becomes 50% by weight or more as compared with the impregnation initiation the temperature of said aqueous suspension is raised to initiate a copolymerization of said vinyl monomer with said radical (co) polymeric organic peroxide within said epoxy group-containing ethylene copolymer to obtain a graft polymerization precursor (A); thus obtained graft polymerization precursor (A) in an amount of from 1 to 100% by weight, an epoxy group-containing ethylene copolymer (B) in an amount of from 0 to 99% by weight, and a vinyl type (co) polymer (C) prepared by polymerizing at least one kind of vinyl monomer in an amount of from 0 to 99% by weight are melt-mixed with a thermoplastic copolymeric polyester resin or said (A), said (B) and said (c) are previously melt-mixed within a temperature range of from 100 to 300° C and the resultant mixture is further melt-mixed with a thermoplastic copolymeric polyester resin to prepare an adhesive composite resin.

7. A method of preparing an adhesive composite resin ac cording to Claim 6, wherein said radical (co) polymeric organic peroxide is a mixture consisting of one or more peroxycarbonate compounds represented by the following general formula (a) or (b):

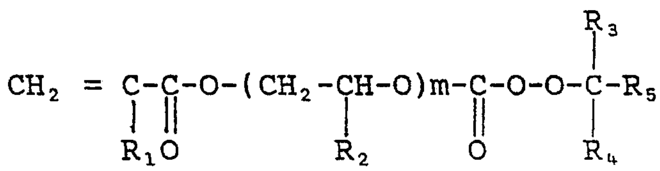
··· (a)

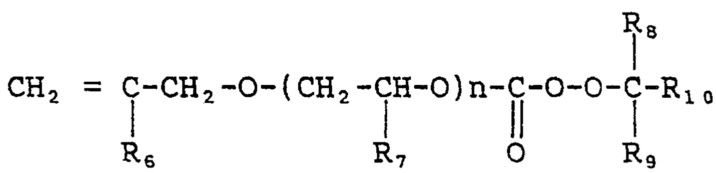
··· (b)

wherein $R_1$ stands for a hydrogen atom or an alkyl group having carbon atoms of from 1 to 2;
$R_2$ and $R_7$ respectively stand for a hydrogen atom or methyl group;
$R_6$ stands for a hydrogen atom or an alkyl group having carbon atoms of from 1 to 4;
$R_3$, $R_4$ and $R_8$, $R_9$ respectively stand for an alkyl group having carbon atoms of from 1 to 4;
$R_5$ and $R_{10}$ respectively stand for an alkyl, phenyl, or alkylated phenyl group having carbon atoms of from 1 to 12, or a cycloalkyl group having carbon atoms of from 3 to 12;
m stands for a figure of 1 or 2; and
n stands for a figure of 0, 1 or 2.

8. A laminated material having a construction of at least two layers, which consists of: a substrate of at least one selected from the group consisting of thermoplastic resin, setting resin, rubber, metal, glass, wood, paper, nonwoven fabric and woven fabric; and said adhesive composite resin as Claimed in Claim 1 or 2.

9. A laminated material according to Claim 8, wherein said substrate is at least one thermoplastic resin selected from the group consisting of polyolefin type resin, polyamide type resin, aromatic polyester type resin, polycarbonate type resin, hard or soft vinyl chloride type resin, polyvinylidene chloride type resin, saponified ethylenevinyl acetate copolymer, polystyrene type resin, ABS resin, polyurethane type resin and a mixture of the prescribed compounds.

# INTERNATIONAL SEARCH REPORT

International Application No PCT/JP90/00082

**I. CLASSIFICATION OF SUBJECT MATTER** (if several classification symbols apply, indicate all) [6]

According to International Patent Classification (IPC) or to both National Classification and IPC

Int. $Cl^5$ C09J167/02, B32B27/36

**II. FIELDS SEARCHED**

Minimum Documentation Searched [7]

| Classification System | Classification Symbols |
|---|---|
| IPC | C09J167/02, B32B27/36 |

Documentation Searched other than Minimum Documentation to the Extent that such Documents are Included in the Fields Searched [8]

| | |
|---|---|
| Jitsuyo Shinan Koho | 1926 - 1988 |
| Kokai Jitsuyo Shinan Koho | 1971 - 1988 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X, Y | JP, A, 61-281 (Sumitomo Chemical Co. Ltd., Toyobo Co., Ltd.), 6 January 1986 (06. 01. 86), line 5, lower left column to line 18, lower right column, page 1 & EP, B1, 145,391 & US, A, 4,720,524 & US, A, 4,771,106 | 1,2,3,4,5, 6,7,8,9 |
| Y | JP, B2, 58-3486 (Nippon Telegraph & Telephone Public Corporation, Nippon Unicar K.K.), 21 January 1983 (21. 01. 83), line 36, column 1 to line 15, column 2 (Family: none) | 3, 4, 6, 7 |
| Y | JP, A, 52-35231 (Eastman Kodak Co.), 17 March 1977 (17. 03. 77), line 5, lower left column to line 1, upper right column, page 1 & DE, A1, 2,539,633 | 5 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| April 16, 1990 (16. 04. 90) | May 7, 1990 (07. 05. 90) |
| **International Searching Authority** | **Signature of Authorized Officer** |
| Japanese Patent Office | |